# FASCICULE DE BREVET EUROPEEN

(11) **EP 4 120 850 B1**
(45) Date de publication et mention de la délivrance du brevet: **06.03.2024**
(21) Numéro de dépôt: 21711916.3
(22) Date de dépôt: 18.03.2021
(51) Int. Cl.: A23L 33/16, A23L 33/19, A23L 33/00, A23C 3/02, A23C 9/152, A23C 9/20

(54) **COMPOSITION NUTRITIONNELLE LIQUIDE LONGUE CONSERVATION A TENEUR ÉLEVÉE EN PROTÉINES**
LANGLEBIGE FLÜSSIGE NÄHRSTOFFZUSAMMENSETZUNG MIT HOHEM PROTEINGEHALT
LONG-LIFE LIQUID NUTRITIONAL COMPOSITION WITH HIGH PROTEIN CONTENT

(30) Priorité: 19.03.2020 FR 2002706
(43) Date de publication de la demande: 25.01.2023
(73) Titulaire: Groupe Lactalis, 53000 Laval (FR)
(72) Inventeur: BIGOT, Jean-Jacques, 53000 LAVAL (FR); DHONT, Mathieu, 53000 LAVAL (FR); HAZART, Etienne, 53000 LAVAL (FR); LOISELEUX, Thibault, 53000 LAVAL (FR)
(74) Mandataire: Cabinet Le Guen Maillet
(86) Numéro de dépôt international: PCT/EP2021/056945
(87) Numéro de publication internationale: WO 2021/185966

(56) Documents cités:
- WO-A1-2013/129912
- WO-A2-2016/174651
- LAKSHMI RAMASUBRAMANIAN ET AL: "The rheological properties of calcium-induced milk gels", JOURNAL OF FOOD ENGINEERING, vol. 130, 2 février 2014 (2014-02-02), pages 45-51, XP055395360, GB ISSN: 0260-8774, DOI: 10.1016/j.jfoodeng.2014.01.020
- N.N.: "Prodiet 87B Fluid", , 22 décembre 2015 (2015-12-22), XP055753354, Extrait de l'Internet: URL:https://storage.ua.prom.st/968170_kaze in_sertifi__zvoditelya.pdf [extrait le 2020-11-24]
- Jennifer Grebow: "Functional Beverages: New ingredients and technologies to quench the thirst for beverage innovation", Nutritional Outlook, 16 septembre 2011 (2011-09-16), pages 1-12, XP055753365, Extrait de l'Internet: URL:https://www.nutritionaloutlook.com/vie w/functional-beverages-new-ingredients-and -technologies-quench-thirst-beverage-innov ation [extrait le 2020-11-24]
- N.N.: "SureProtein Vital WPC 550 Fonterra Co-Operative Group Ltd", Ingredients Network, 11 juin 2017 (2017-06-11), pages 1-10, XP055753595, Extrait de l'Internet: URL:https://web.archive.org/web/2017061120 4345/https://www.ingredientsnetwork.com/su reprotein-vital-wpc-550-heat-stable-wpc80- prod134007.html [extrait le 2020-11-24]

## Description

La présente invention concerne une composition nutritionnelle liquide longue conservation à température ambiante comprenant une quantité de protéines d'origine laitière supérieure à 14 g pour 100 ml de la composition.

Des compositions nutritionnelles sous forme de boissons spécifiquement adaptées à la condition de personnes telles que des personnes âgées, des personnes malades ou en convalescence, mais encore des sportifs, des personnes actives ou des enfants, sont développées et proposées afin de leur apporter les composés nutritifs répondant à leurs besoins et qu'ils ne trouvent pas, ou bien pas en quantité suffisante, dans leur alimentation.

En nutrition clinique par exemple, la complémentation à l'aide de ce type de compositions nutritionnelles a pour but, principalement, la renutrition de la personne dénutrie ou l'anticipation d'un état de dénutrition susceptible de survenir en cas d'hospitalisation ou de maladie. La dénutrition peut se définir comme un déséquilibre entre apports et besoins. Une telle complémentation a pour but d'apporter principalement des calories et/ou des protéines.

Chez la personne âgée ou malade se trouvant dans un état de dénutrition, le complément oral nutritionnel journalier doit être d'au moins 30 g de protéines et de 400 Kcal selon la recommandation officielle de la Haute Autorité de Santé. Il s'agit d'un apport complétant l'alimentation courante.

Généralement, les compositions nutritionnelles enrichies en protéines et utilisées dans de telles situations incluent en tant que sources de protéines, des protéines d'origine laitière telles que des caséines et des protéines solubles de lait.

On trouve aujourd'hui sur le marché des boissons liquides hyper protéinées contenant une quantité de protéines de l'ordre de 10 à 14 g de protéines pour 100 ml. Cependant, pour atteindre la valeur de complémentation orale nutritionnelle journalière recommandée, en particulier sur le plan protéique, il est nécessaire pour le consommateur d'ingérer un volume important de la boisson pouvant aller de 200 à 300ml, soit en une seule prise soit en plusieurs prises, ce que de nombreuses personnes ne font pas ou bien n'arrivent plus à faire.

Des études cliniques ont montré par ailleurs une meilleure observance se traduisant par une augmentation des apports protéiques et énergétiques quand la boisson à prendre en complément est densifiée. On note immédiatement l'intérêt de disposer de boissons plus concentrées en protéines (> 14g/100ml). Cependant, la formulation de compositions liquides à de forts taux de protéines génère de nombreuses problématiques techniques et notamment l'augmentation de la viscosité de la composition durant la fabrication et le stockage. Ce phénomène est encore plus accentué lorsque la composition subit un traitement thermique. En effet, les protéines de lait sont sensibles aux traitements thermiques, tels que la thermisation, la pasteurisation et la stérilisation. De tels traitements sont connus pour induire des phénomènes de dénaturation, d'épaississement, voire de gélification, d'apparition de troubles ou de décantation des protéines, ce qui provoquent la formation de dépôts. Or, ces traitements sont nécessaires pour garantir l'absence de développement de germes tout au long de la durée de conservation du produit dans des conditions de conservation réfrigérées (< 6°C) ou bien à température ambiante pour des durées de conservation pouvant aller jusqu'à vingt-quatre mois.

Les interactions entre les différents composants de la composition peuvent également affecter la stabilité des protéines et ainsi augmenter la viscosité de la composition. C'est le cas par exemple des interactions entre protéines et minéraux.

WO 2016/174651 A2 divulgue une composition nutritionnelle liquide traitée thermiquement ayant une teneur élevée en protéines de 8 à 20 g de protéine pour 100 ml de la composition, dans laquelle au moins 40% en poids de la protéine est de la caséine micellaire et au moins 10% en poids de la protéine est une protéine de lactosérum hydrolysée. De préférence, le pH de la composition est compris entre 6 et 8. WO 2013/129912 A1 divulgue une composition nutritionnelle liquide ayant un pH compris entre 6 et 8, ayant une teneur élevée en protéines de 6 à 20 g pour 100 ml de la composition, lesdites protéines comprenant de la caséine micellaire et de l'acide lactique, ayant une viscosité modérée, qui permet 1 'apport de quantités considérables de protéines dans un volume réduit. De préférence, la quantité de caséine micellaire est d'au moins 55% en poids sur la base de la teneur totale en protéines. Lakshmi Ramasubramanian ET AL: "The rheological properties of calcium-induced milk gels", Journal of Food Engineering, vol. 130, 2 février 2014 (2014-02-02), pages 45-51 divulgue que le traitement thermique du lait au calcium ajouté est difficile car l'ajout de sels de calcium solubles augmente la concentration de calcium ionique du lait et diminue le pH du lait, qui peuvent tous deux conduire à la coagulation du lait pendant le traitement thermique. N.N.: "Prodiet 87B Fluid", , 22 décembre 2015 (2015-12-22), XP055753354, Extrait de l'Internet:URL:https://storage.ua.prom.st/968170 kazein_sertifi zvoditelya.pdf [extrait le 2020-11-24] divulgue que le produit Prodiet 87B est riche en caséine micellaire (92% contre 80% dans le lait d'origine) et bénéficie d'une fluidité accrue. Cette caractéristique le rend particulièrement adapté aux boissons: il permet d'atteindre des teneurs en protéines très élevées dans les produits finis tout en limitant l'augmentation de viscosité. Le produit offre une bonne stabilité thermique et un goût lacté agréable. Jennifer Grebow: "Functional Beverages: New ingrédients and technologies to quench the thirst for beverage innovation", Nutritional Outlook, 16 septembre 2011 (2011-09-16), pages 1-12, XP055753365, Extrait de l'Intemet:URL:https://www.nutritionaloutlook.com/view/functional-beverages-new-ingredients-and-technologies-quench-thirst-beverage-innovation [extrait le 2020-11-24] divulgue que dans des boissons, une teneur en protéines très élevée est parfois souhaitée mais une viscosité élevée de la boisson ne l'est pas. La société Ingredia Nutritional a développée une boisson au concept de récupération sportive, appelée Refuel & Repair, qui a une teneur élevée en protéines d'hydrolysat de protéines de lait à 12% et isolat hautement purifié. Grâce à l'ingrédient Prodiet 87 B, des niveaux plus élevés de protéines dans les boissons de 30 g de protéines par flacon de 250 ml sont possibles sans augmenter la viscosité. N.N.: "SureProtein Vital WPC 550 Fonterra Co-Operative Group Ltd", Ingrédients Network, 11 juin 2017 (2017-06-11), pages 1-10, XP055753595, Extrait de l'Internet: URL:https:// web.archive.org/web/20170611204345/https://www.ingredientsnetwork.com/sureprotein-vital-wpc-550-heat-stable-wpc80-prod134007.html [extrait le 2020-11-24] divulgue que le produit Fonterra SureProtein Whey Protein Concentrate 550 est un concentré de protéines de lactosérum thermostable contenant au moins 80% de lactosérum, qui peut être utilisé pour formuler des boissons riches en protéines de longue conservation, utiles pour la nutrition sportive et médicale, et peut éviter des problèmes causées par des traitements thermiques appliqués à des formulations liquides contenant des ingrédients traditionnels de protéines de lactosérum, tels qu'une texture sablée et grumeleuse, une viscosité élevée, sédimentation ou gélification pendant la durée de conservation.

La présente invention a ainsi pour but de proposer une composition nutritionnelle liquide traitée thermiquement qui contienne une forte teneur en protéines de lait entières, non hydrolysées pour un faible volume de liquide, qui soit stable lors du traitement thermique, qui présente de bonnes propriétés organoleptiques et qui conserve l'ensemble de ces caractéristiques tout au long de sa durée de conservation.

A cet effet, l'invention concerne une composition nutritionnelle liquide traitée thermiquement présentant un pH supérieur à 6,40, comprenant au moins 14 g pour 100 ml de composition, de protéines laitières non hydrolysées constituées d'un mélange de caséines représentant au moins 70% de la matière azotée totale du mélange et d'au plus 30% de protéines sériques dénaturées, ledit mélange étant tel que sa teneur en calcium est inférieure ou égale à 2,40 g de calcium pour 100g de matière azotée totale du mélange.

Grâce au choix spécifique des protéines laitières, en particulier de la teneur en calcium du mélange de protéines, la composition nutritionnelle selon l'invention contient une quantité élevée de protéines tout en demeurant buvable. La composition est stable au cours du traitement thermique et dans le temps, jusqu'à 24 mois, non seulement d'un point de vue microbiologique mais également d'un point de vue de sa viscosité.

Selon un mode de réalisation de l'invention, la composition comprend entre 15 et 20 g de protéines pour 100 ml de la composition.

Préférentiellement, la teneur en calcium du mélange est inférieure ou égale à 2,10, plus préférentiellement inférieure à 1,90 g de calcium pour 100g de matière azotée totale.

Selon un autre mode de réalisation, la composition comprend, de plus, au moins une source de glucides à une teneur s'étendant jusqu'à 30 %, en poids de la composition.

Avantageusement, la composition comprend, de plus, au moins une source de minéraux, en particulier une source de phosphore, potassium, magnésium, fer, sodium, chlore, molybdène, chrome, sélénium, zinc, et cuivre, manganèse, fluor, iode

Avantageusement encore, la composition comprend, de plus, au moins une source de vitamines, en particulier une source de vitamine A, vitamine B1, vitamine B2, vitamine B3 (niacine), vitamine B5, vitamine B6, , vitamine B8, vitamine B9, vitamine B12, vitamine C, vitamine D, vitamine E, vitamine K, ou un mélange.

Avantageusement encore, la composition comprend, de plus, au moins une source de lipides à une teneur s'étendant jusqu'à 15 %, en poids de la composition. Dans le cadre de la composition lipidique, la boisson peut dans certains cas contenir une source de DHA ou/et d'ARA.

Avantageusement encore, la composition comprend, de plus, au moins une autre source de composés dont une source d'émulsifiants, une source d'arômes, une source d'antioxydants, une source de colorants.

Avantageusement, la composition présente une densité calorique d'au moins 150 Kcal/100 ml, de préférence d'au moins 200 Kcal/100 ml.

L'invention concerne encore une composition telle que décrite précédemment pour son utilisation dans l'alimentation de la personne active, sportive, quel que soit son âge ou bien son état de santé ou bien toute personne en situation de dénutrition ou risquant de l'être.

### Les protéines :

La composition comprend au moins 14 g pour 100 ml de composition, de protéines d'origine laitières non hydrolysées.

De manière préférée, la composition comprendra au moins 15, préférentiellement au moins 16, au moins 17, au moins 18, au moins 19 ou au moins 20 g de protéines d'origine laitières pour 100ml de composition.

Les protéines d'origine laitières dans le cadre de l'invention sont constituées d'un mélange de caséines et de protéines sériques dénaturées.

Les caséines représentent au moins 70% de la matière azotée totale, le reste étant composé de protéines sériques dénaturées.

La source de caséine peut être choisie parmi un isolat de protéines de lait (MPI), un concentré de protéines de lait (MPC), un isolat de caséine micellaire (MCI), un rétentat de microfiltration du lait ou un rétentat d'ultrafiltration du lait.

Les protéines sériques dénaturées peuvent se trouver sous forme agrégées.

Les protéines sériques dénaturées peuvent être obtenues à partir d'un isolat ou d'un concentré de protéines sériques de lait obtenu selon n'importe quelle méthode connue. Préférentiellement les protéines sont issues du lait de vache. Dans le mélange protéique selon l'invention, la teneur en calcium est inférieure ou égal à 2,40 g de calcium pour 100g de matière azotée totale, préférentiellement, elle est inférieure ou égale à 2,10 et plus préférentiellement encore, elle est inférieure ou égale à 1,90 g de calcium pour 100g de matière azotée totale.

Les caractéristiques du mélange de protéines selon l'invention permettent pour la première fois d'obtenir une composition à forte teneur en protéines dont la viscosité n'est pas affectée lors de sa fabrication, notamment lors de l'étape de traitement thermique nécessaire à la stérilisation. La composition est fluide et demeure stable en longue conservation, même à des teneurs en protéines supérieures ou égales à 14 g pour 100ml.

### Les glucides :

Les glucides ont pour fonction de contribuer à l'apport énergétique de la composition, mais également, en fonction de leur nature, de participer à la caractéristique sensorielle de goût, notamment sucrée.

A titre de glucides, la composition peut comprendre des oligosaccharides ou polysaccharides digestibles tels que du lactose, du saccharose, du glucose ou des oligosaccharides ou polysaccharides non digestibles tels que l'inuline ou du fructo-oligosaccharides, ou encore tout autre glucide autorisé dans l'industrie alimentaire.

La fraction glucidique peut représenter jusqu'à 30 %, en poids, du poids total de la composition.

Lorsque la composition selon l'invention se trouve sous la forme d'une boisson hypercalorique, ou riche en glucides, la fraction glucidique est composée de sirop de glucose, de saccharose ou bien d'un mélange de sirop de glucose et de maltodextrine, notamment une maltodextrine présentant un dextrose équivalent (DE) supérieur à 12.

### Les lipides

Les lipides ont pour fonction de contribuer, avec les glucides, à l'apport énergétique de la composition.

Les lipides sont apportés par une ou plusieurs sources de matière grasse alimentaire d'origine animale ou végétale. Il peut s'agir d'huile végétale, en particulier d'huile de colza, de maïs, de coprah, de palme, de soja, de tournesol ou leurs mélanges. Les lipides d'origine végétale sont intéressants dans le cadre de l'invention de manière à apporter des acides gras essentiels et à ajuster le ratio oméga 3/oméga 6. Au-delà du ratio oméga 3 / oméga 6, des apports de DHA ou/et d'ARA peuvent être réalisés dans certaines compositions.

Les lipides sont apportés jusqu'à 15 %, en poids, par rapport au poids total de la composition.

### Les minéraux et les vitamines :

Les minéraux et vitamines peuvent être ajoutés dans la composition de manière à couvrir les apports nutritionnels conseillés. Les minéraux et vitamines sont en effet essentiels au maintien de la bonne santé. Des carences en l'un ou l'autre de ces composés peuvent avoir des conséquences non négligeables et entraîner des troubles de la santé tels que l'ostéoporose en cas de déficiences en manganèse, calcium ou vitamine D, ou des maladies cardio-vasculaires en cas de déficiences en potassium.

A titre de source de minéraux, la composition peut comprendre une source de phosphore, potassium, magnésium, fer, sodium, chlore, molybdène, chrome, sélénium, zinc, et cuivre, manganèse, fluor, iode ou des mélanges.

Les minéraux peuvent être ajoutés par exemple à hauteur de 0,001 à 1%, en poids, par rapport au poids total de la composition.

A titre de vitamines, la composition peut comprendre la vitamine A, B1, B2, B3 (niacine), B5, B6, B8, B9, B12, C, D, en particulier D3, E, K, en particulier K1, ou leurs mélanges. L'apport en vitamines, par exemple, chez la personne âgée ou en dénutrition est important puisque des carences sont relativement souvent observées, notamment chez la personne âgée isolée. Les vitamines sont impliquées dans de nombreux mécanismes physiologiques et participent au maintien d'un bon état général de santé. La composition peut ainsi inclure des vitamines ou mix vitaminiques ou autres sources de vitamines à hauteur de 0,0002 à 0,5 %, en poids, par rapport au poids total de la composition.

### Autres composés :

La composition selon l'invention peut comprendre au moins un autre composé choisi parmi les acides aminés, colorants, arômes, épaississants, texturants, émulsifiants, enzymes, antis oxydants ou tout autre additif alimentaire autorisé.

### Eau

La composition comprend de l'eau à une teneur comprise entre 40 et 75% en poids.

### Nature de la composition alimentaire :

La composition se présente sous une forme liquide, préférentiellement sous la forme d'une boisson.

Au sens de l'invention, une composition est liquide si elle présente les caractéristiques d'un fluide, et la capacité à couler lorsque son contenant est incliné. Une telle composition présente généralement une viscosité inférieure à 350, préférentiellement inférieure à 200, plus préférentiellement inférieure à 150 mPa.s mesurée à 20°C sur un viscosimètre de type Rheomat 100 (Disque BV 10 /Diamètre 40/ T° ambiante(20-22°C) / gradient 100s⁻¹).

### Densité énergétique :

Avantageusement, la composition présente une densité énergétique préférentiellement d'au moins 150 Kcal/100 ml, de préférence d'au moins 200 Kcal/100 ml.

### Conditionnement :

Le conditionnement en bouteille peut être prévu entre 50 ml et 1L, préférentiellement 125 ml. La bouteille est préférentiellement imperméable à l'oxygène et à la lumière.

### Traitement thermique :

Les compositions sont traitées thermiquement à l'aide de procédés connus, tels que la thermisation, la pasteurisation ou la stérilisation qui peuvent être techniquement réalisées. De préférence, les compositions sont traitées thermiquement par traitements de type ultra hautes températures (U.H.T) ou bien par traitement autoclave.

L'invention sera mieux comprise à la lecture des exemples de réalisation qui suivent, qui se veulent illustratifs et non limitatifs.

### Exemple 1 : Boissons hyper protéinées et hyper caloriques aromatisées vanille

Le [Tab 1] illustre la comparaison entre des boissons formulées avec un isolat de protéines de lait et un concentré de protéines solubles selon l'invention (Exemple 1 et 2) et une boisson formulée avec une source de protéines laitières ne présentant pas les caractéristiques de la source selon l'invention (Témoin). Les boissons liquides sont donc préparées à partir des ingrédients indiqués dans le [Tab 1] avant de subir un traitement Ultra Haute Température.

**[Tableau 1]**

| | Cible | Témoin | Exemple 1 | Exemple 2 |
|---|---|---|---|---|
| Matière azotée (MAT) g/100 ml de produit fini | >14,00 | 16,50 | 15,80 | 19,00 |
| Kcal/100 ml | 1,50 à 2,25 | 2,25 | 2,25 | 2,00 |
| Ingrédients protéiques | Protéines totales apportées par un isolat de protéines de lait et un concentré de protéines solubles de lait dénaturées | Protéines totales apportées exclusivement par un isolat de protéines de lait | Protéines totales apportées par un isolat de protéines de lait et par un concentré de protéines solubles de lait dénaturées | Protéines totales apportées par un isolat de protéines de lait et par un concentré de protéines solubles de lait dénaturées |
| Fraction Caséines/Protéines sériques (% MAT) | > 70 / < 30 | 85 / 15 | 73 / 27 | 73 / 27 |
| Calcium (g/100ml de produit fini) | | 0,430 | 0,360 | 0,440 |
| Rapport Calcium/100g MAT | < 2,40 | 2,60 | 2,27 | 2,31 |
| Dégustation (texture en bouche) | produit fluide à léger épais, qui s'écoule de la bouteille et peut être consommé comme une boisson | produit très épais en bouche, le produit ne sort pas de la bouteille | produit fluide, légèrement épais, buvable avec une sensation de légère épaisseur en bouche, sans persistance en bouche | produit fluide, légèrement épais, nappant en bouche sensation d'épaisseur qui ne persiste pas en bouche |
| Viscosité à T°C ambiante (20-22°C) mPas.S (3 mois) | < 350 | 836 | 157 | 295 |
| Ph | > 6,40 | 6,90 | 6,50 | 6,50 |

L'Isolat de protéines de lait est commercialisés par la société Ingrédia SA sous la marque Prodiet 87 B fluide ; Le concentré de protéines solubles de lait dénaturées est commercialisé par la société Fonterra sous la marque Whey Protein Concentrate 550. La source de protéines des exemples 1 et 2 contiennent un mélange de ces deux ingrédients.

Dans le [Tab 1] sont indiquées les données pour chaque source de protéines apportées :
- taux de MAT exprimé en g pour 100ml de produit fini
- taux de calcium exprimé en mg pour 100 ml de produit fini

La viscosité de la boisson est mesurée à l'aide d'un viscosimètre de type Lamy Rheomat 100 avec un disque BV10, cisaillement 100s-1 à température ambiante (20-22°C).

## Revendications

1. Composition nutritionnelle liquide traitée thermiquement et présentant un pH supérieur à 6,40 **caractérisée en ce qu'**elle comprend au moins 14 g de protéines laitières non hydrolysées pour 100 ml de composition, lesdites protéines laitières non hydrolysées sont constituées d'un mélange de caséines représentant au moins 70 % de la matière azotée totale du mélange et de protéines sériques dénaturées représentant au plus 30 % de la matière azotée totale du mélange, ledit mélange étant tel que sa teneur en calcium est inférieure ou égale à 2,40 g de calcium pour 100g de matière azotée totale du mélange.

2. Composition selon la revendication 1, **caractérisée en ce qu'**elle comprend entre 15 et 20 g de protéines laitières non hydrolysées pour 100 ml de composition.

3. Composition selon la revendication 1 ou 2, **caractérisée en ce que** la teneur en calcium du mélange est inférieure ou égale à 2,10, plus préférentiellement inférieure à 1,90 g de calcium pour 100g de matière azotée totale.

4. Composition selon l'une des revendications précédentes, **caractérisée en ce qu'**elle comprend, de plus, au moins une source de glucides à une teneur s'étendant jusqu'à 30 %, en poids de la composition.

5. Composition selon l'une des revendications précédentes, **caractérisée en ce qu'**elle comprend, de plus, au moins une source de minéraux, en particulier une source de phosphore, potassium, magnésium, fer, sodium, chlore, molybdène, chrome, sélénium, zinc, et cuivre, manganèse fluor, iode

6. Composition selon l'une des revendications précédentes, **caractérisée en ce qu'**elle comprend, de plus, au moins une source de vitamines, en particulier une source de vitamine A, vitamine B1, vitamine B2, vitamine B3 , vitamine B5, vitamine B6, vitamine B8, vitamine B9, vitamine B12, vitamine C, vitamine D, vitamine E, vitamine K ou un mélange.

7. Composition selon l'une des revendications précédentes, **caractérisée en ce qu'**elle comprend, de plus, au moins une source de lipides à une teneur s'étendant jusqu'à 15 %, en poids de la composition.

8. Composition selon l'une des revendications précédentes, **caractérisée en ce qu'**elle comprend, de plus, au moins une autre source de composés dont une source d'émulsifiants, une source d'arômes, une source d'antioxydants, une source de colorants.

9. Composition selon l'une des revendications précédentes, **caractérisée en ce qu'**elle présente une densité calorique d'au moins 150 Kcal/100 ml, de préférence d'au moins 200 Kcal/100 ml.

10. Composition telle que décrite dans l'une des revendications 1 à 9 pour son utilisation dans l'alimentation de la personne active, sportive, âgée ou malade, ou en situation de dénutrition ou risquant de l'être.

## Patentansprüche

1. Thermisch behandelte und einen pH-Wert von über 6,40 aufweisende flüssige Nährstoffzusammensetzung, **dadurch gekennzeichnet, dass** sie wenigstens 14 g nicht hydrolysierte Milchproteine auf 100 ml Zusammensetzung umfasst, die genannten nicht hydrolysierten Milchproteine aus einer Mischung an Kaseinen, die sich aus mindestens 70% des Gesamtstickstoffgehalts der Mischung und aus mehr als 30% denaturierte Serumproteine der Gesamtstickstoffmenge zusammensetzt, wobei die genannte Mischung so ist, dass ihr Kalziumgehalt kleiner oder gleich 2,40g Kalzium auf 100g Gesamtstickstoffgehalt der Mischung ist.

2. Zusammensetzung nach Anspruch 1, **dadurch gekennzeichnet, dass** sie zwischen 15 und 20g nicht hydrolysierte Milchproteine auf 100 ml Zusammensetzung umfasst.

3. Zusammensetzung nach Anspruch 1 oder 2, **dadurch gekennzeichnet, dass** der Kalziumgehalt der Mischung kleiner oder gleich 2,10, besonders vorzugsweise kleiner als 1,90g Kalzium auf 100g des Gesamtstickstoffgehalts ist.

4. Zusammensetzung nach einem der vorhergehenden Ansprüche, **dadurch gekennzeichnet, dass** sie zudem wenigstens eine Kohlenhydratquelle mit einem Gehalt bis zu 30% auf das Gewicht der Zusammensetzung umfasst.

5. Zusammensetzung nach einem der vorhergehenden Ansprüche, **dadurch gekennzeichnet, dass** sie zudem wenigstens eine Mineralstoffquelle, insbesondere eine Quelle für Phosphor, Kalium, Magnesium, Eisen, Natrium, Chlor, Molybdän, Chrom, Mangan, Fluor, Jod umfasst.

6. Zusammensetzung nach einem der vorhergehenden Ansprüche, **dadurch gekennzeichnet, dass** sie zudem wenigstens eine Vitaminquelle, insbesondere eine Quelle für Vitamin A, Vitamin B1, Vitamin B2, Vitamin B3, Vitamin B5, Vitamin B6, Vitamin B8, Vitamin B9, Vitamin B12, Vitamin C, Vitamin D, Vitamin E, Vitamin K oder eine Mischung umfasst.

7. Zusammensetzung nach einem der vorhergehenden Ansprüche, **dadurch gekennzeichnet, dass** sie zudem wenigstens eine Lipidquelle mit einem Gehalt bis zu 15% auf das Gewicht der Zusammensetzung umfasst.

8. Zusammensetzung nach einem der vorhergehenden Ansprüche, **dadurch gekennzeichnet, dass** sie zudem wenigstens eine weitere Quelle von Verbindungen umfasst, darunter eine Quelle von Emulgatoren, eine Quelle von Aromen, eine Quelle von Antioxydantien, eine Quelle von Farbstoffen.

9. Zusammensetzung gemäß einem der vorhergehenden Ansprüche, **dadurch gekennzeichnet, dass** sie eine kalorische Dichte von mindestens 150 Kcal/100 ml, vorzugsweise mindestens 200 Kcal/100 ml aufweist.

10. Zusammensetzung wie in einem der Ansprüche 1 bis 9 beschrieben, zur Verwendung in der Ernährung der aktiven, sportlichen, älteren oder kranken Person, oder bei Unternährung oder drohender Unternährung.

## Claims

1. Heat-treated liquid nutritional composition having a pH above 6.40, **characterised in that** it comprises at least 14 g of non-hydrolysed dairy proteins per 100 ml of composition, said non-hydrolysed dairy proteins consist of a mixture of caseins representing at least 70% of the total nitrogenous material of the mixture and of denatured serum proteins representing no more than 30% of the total nitrogenous material of the mixture,, said mixture being such that its calcium content is less than or equal to 2.40 g of calcium per 100 g of total nitrogenous material.

2. Composition according to claim 1, **characterised in that** it comprises between 15 and 20 g of non-hydrolysed dairy proteins per 100 ml of the composition.

3. Composition according to claim 1 or 2, **characterised in that** the calcium content of the mixture is less than or equal to 2.10, more preferentially less than 1.90 g of calcium per 100 g of total nitrogenous material.

4. Composition according to one of the preceding claims, **characterised in that** it also comprises at least one source of carbohydrates in a proportion extending up to 30%, by weight of the composition.

5. Composition according to one of the preceding claims, **characterised in that** it also comprises at least one source of minerals, in particular a source of phosphorus, potassium, magnesium, iron, sodium, chlorine, molybdenum, chromium, selenium, zinc, and copper, manganese, fluorine, iodine.

6. Composition according to one of the preceding claims, **characterised in that** it also comprises at least one source of vitamins, in particular a source of vitamin A, vitamin B1, vitamin B2, vitamin B3, vitamin B5, vitamin B6, vitamin B8, vitamin B9, vitamin B12, vitamin C, vitamin D, vitamin E, vitamin K or a mixture.

7. Composition according to one of the preceding claims, **characterised in that** it also comprises at least one source of lipids in a proportion extending up to 15%, by weight of the composition.

8. Composition according to one of the preceding claims, **characterised in that** it also comprises at least one other source of compounds including a source of emulsifiers, a source of flavourings, a source of antioxidants, a source of colourants.

9. Composition according to one of the preceding claims, **characterised in that** it has a caloric density of at least 150 Kcal/100 ml, preferably at least 200 Kcal/100 ml.

10. Composition as described in one of claims 1 to 9 for use thereof in the diet of an active, sportive, elderly or ill person, or a person in a situation of malnutrition or risking same.
